# EUROPÄISCHE PATENTANMELDUNG

(11) **EP 2 797 006 A1**
(43) Veröffentlichungstag der Anmeldung: **29.10.2014**
(21) Anmeldenummer: 14165963.1
(22) Anmeldetag: 25.04.2014
(51) Int. Cl.: G06F 13/10, G06F 3/041

(54) **Verbindung von Tablet-PC mit Desktop- oder Laptop-PC**

(30) Priorität: 26.04.2013 DE 102013007232
(71) Anmelder: Hoppe, Peter, 45894 Gelsenkkirchen-Buer (DE)
(72) Erfinder: Hoppe, Peter, 45894 Gelsenkkirchen-Buer (DE)
(74) Vertreter: Isfort, Olaf

(57) **Zusammenfassung**

Die Erfindung betrifft ein Datenverarbeitungssystem mit einem Desktop- oder Laptop-PC (1) und einem Tablet-PC (4), wobei der Desktop- oder Laptop-PC (1) mit dem Tablet-PC (4) über eine Datenkommunikationsschnittstelle verbunden ist. Aufgabe der Erfindung ist es, die Bedienung eines Tastatureingaben akzeptierenden Anwendungsprogramms, das auf dem Desktop- oder Laptop-PC (1) abläuft, für den Benutzer zu vereinfachen. Diese Aufgabe löst die Erfindung dadurch, dass die Datenkommunikationsschnittstelle eine Tastaturschnittstelle ist.

## Beschreibung

Die Erfindung betrifft ein Datenverarbeitungssystem mit einem Desktop- oder Laptop-PC und einem Tablet-PC, wobei der Desktop- oder Laptop-PC mit dem Tablet-PC über eine Datenkommunikationsschnittstelle verbunden ist.

Unter einem Desktop-PC oder auch Desktop-Computer ist ein Computer in einer Gehäuseform passend für den Einsatz als Arbeitsplatzrechner auf Schreibtischen zu verstehen. Im allgemeinen Sprachgebrauch bezeichnet man mit Desktop-PC einen Mikrocomputer. Ein Laptop-PC, auch als Notebook bezeichnet, ist ein kleiner, tragbarer Personalcomputer. Desktop- und Laptop-PCs werden im Folgenden einheitlich kurz als "PC" bezeichnet.

PCs werden heutzutage standardmäßig in Unternehmen von Mitarbeitern verwendet, um die verschiedensten Anwendungsprogramme auszuführen. In Unternehmen sind die PCs in der Regel miteinander vernetzt. Die von den Mitarbeitern benutzten PCs stehen über das Netzwerk mit zentralen Servern in Verbindung. Hohe Anforderungen an die Datensicherheit haben dazu geführt, dass PCs in Unternehmen häufig so eingerichtet werden, dass der Anschluss von Peripheriegeräten (USB-Sticks, mobile Festplatten usw.) nicht möglich ist. Desweiteren wird in Unternehmen häufig der Zugriff auf das Internet über das Netzwerk des Unternehmens unterbunden, um zu verhindern, dass unerwünschte Daten oder Schadprogramme (z.B. Viren oder Trojaner) in das Unternehmensnetzwerk gelangen.

Viele in Unternehmen eingesetzte Anwendungsprogramme (z.B. Warenwirtschaftssysteme, Planungsprogramme) verlangen die manuelle Eingabe von Daten über die Tastatur, die an den PC angeschlossen ist. Beispielsweise werden Bestellnummern, Produktnummern oder andere Produkte oder Gegenstände bezeichnende Eingaben vom Benutzer verlangt. Bestellnummern und Produktnummern sind häufig schwer zu merkende Ziffern- und/oder Zeichenfolgen. Der Benutzer ist entweder gezwungen, eine große Zahl von Bestell- oder Produktnummern auswendig zu lernen. Alternativ muss er die Bestell- oder Produktnummern aus Katalogen oder anderen Quellen umständlich heraussuchen.

Die heutzutage üblichen Anwendungsprogramme für die Planung von Küchen verlangen beispielsweise vom Benutzer, dass für jedes in eine Planung zu integrierende Küchenelement (Regal, Schrank, Arbeitsplatte, Küchengerät usw.) die entsprechende Produktnummer eingegeben wird. Es existiert eine Vielzahl von Herstellern von Küchenmöbeln und Küchengeräten. Jeder Hersteller verwendet sein eigenes System von Produktnummern. Bei der Küchenplanung muss der Benutzer, d.h. der Küchenplaner, die Produktnummer umständlich aus dem Katalog des jeweiligen Herstellers heraussuchen. Häufig führt dies dazu, dass der Küchenplaner bevorzugt nur die Produkte eines bestimmten Herstellers einsetzt, weil ihm dessen Produktnummern geläufig sind oder weil er den Katalog des Herstellers gut kennt.

Ein Tablet-Computer oder Tablet-PC ist ein tragbarer, flacher Computer in besonders leichter Ausführung mit einem Touchscreen-Display. Ein Tablet-PC, im Folgenden kurz als "Tablet" bezeichnet, weist, anders als bei einem Laptop-PC, keine ausklappbare Tastatur auf. Aufgrund der leichten Bauart und des berührungsempfindlichen Bildschirms zeichnen sich Tablets durch eine einfache Handhabung aus. Die Geräte ähneln in Leistungsumfang, Bedienung und Form modernen Smartphones.

Aufgabe der Erfindung ist es, die Benutzung von üblichen auf PCs benutzten Anwendungsprogrammen zu vereinfachen.

Dieser Aufgabe löst die Erfindung ausgehend von einem Datenverarbeitungssystem der eingangs angegebenen Art dadurch, dass die Datenkommunikationsschnittstelle einer Tastaturschnittstelle ist.

Gemäß der Erfindung wird das Tablet dazu benutzt, Eingaben am PC - statt über die übliche Tastatur - über das Tablet vorzunehmen. Die am Tablet vorgenommenen Eingaben werden über die Tastaturschnittstelle an den PC übertragen. Der PC behandelt das angeschlossene Tablet wie eine Tastatur. Aus Sicht des auf dem PC ablaufenden Anwendungsprogramms macht es somit keinen Unterschied, ob die Eingabe über die herkömmliche Tastatur oder über das Tablet erfolgt. Das Anwendungsprogramm muss in keiner Weise angepasst werden, um das Tablet erfindungsgemäß als Eingabegerät zu benutzen. Ebenso wenig muss die Hardware des PCs angepasst werden. PCs verfügen standardmäßig über eine oder mehrere Tastaturschnittstellen.

Ein Vorteil des erfindungsgemäßen Datenverarbeitungssystems ist, dass das Tablet als Eingabegerät problemlos verwendet werden kann, selbst wenn der PC aus Gründen der Datensicherheit, wie oben erläutert, so eingerichtet ist, dass der Anschluss von Peripheriegeräten eingeschränkt ist. Diese Einschränkungen betreffen nämlich nicht den Anschluss über die Tastaturschnittstelle. Der Anschluss eines Gerätes an die Tastaturschnittstelle wird nicht als bedenklich hinsichtlich der Datensicherheit eingestuft.

Bei einer bevorzugten Ausgestaltung des erfindungsgemäßen Datenverarbeitungssystems ist die Tastaturschnittstelle eine PS/2-Schnittstelle. Viele herkömmlich verwendete PCs verfügen über eine PS/2-Schnittstelle, so dass das erfindungsgemäße Datenverarbeitungssystem in der Praxis mit nahezu jedem PC verwendet werden kann.

Bei einer alternativen Ausgestaltung ist die Tastaturschnittstelle eine USB-Schnittstelle. Dabei behandelt der USB-Controller des PCs das Tablet als Gerät der Klasse Human Interface Device. Der Anschluss von Tastaturen über die USB-Schnittstelle ist bei PCs üblich. Die für den Anschluss einer Tastatur über die USB-Schnittstelle nötigen Gerätetreiber sind in jedem USB-kompatiblen Betriebssystemen bereits integriert. Diese Gerätetreiber können unverändert zum Einsatz kommen, um gemäß der Erfindung über das Tablet erfolgende Eingaben zu verarbeiten. Über die USB-Schnittstelle können prinzipiell auch Peripheriegeräte angeschlossen werden, deren Anschluss aus Sicherheitsgründen unterbunden sein kann (wie z.B. USB-Sticks oder mobile Festplatten). Allerdings ermöglicht es die USB-Schnittstelle mittels des zugehörigen USB-Controllers dem angeschlossenen Peripheriegerät eine Klasse zuzuordnen. Die Klasse Human Interface Device ist bei Einschränkungen der Anschlussmöglichkeiten aus Sicherheitsgründen normalerweise ausgenommen. Somit kann der erfindungsgemäße Anschluss des Tablets über die Tastaturschnittstelle auch bei PCs mit eingeschränkten Anschlussmöglichkeiten erfolgen. Eine Anpassung des PCs ist nicht erforderlich. Sicherheitsbedenken bestehen nicht.

Bei einer vorteilhaften Ausgestaltung des erfindungsgemäßen Datenverarbeitungssystems ist der PC mit dem Tablet drahtlos über die Tastaturschnittstelle verbunden. Die drahtlose Anbindung des Tablets ist für den Benutzer besonders komfortabel. Hardwarelösungen zur drahtlosen Verbindung einer Tastatur über die PS/2-Schnittstelle oder die USB-Schnittstelle existieren und sind kostengünstig verfügbar. Diese können unverändert in dem erfindungsgemäßen Datenverarbeitungssystem eingesetzt werden.

Bevorzugt weist das Tablet des erfindungsgemäßen Datenverarbeitungssystems eine Netzwerkschnittstelle zur Anbindung an ein lokales oder globales Netzwerk auf. Das globale Netzwerk kann z.B. das Internet sein. Praktisch alle am Markt erhältlichen Tablets verfügen über Netzwerkschnittstellen. Diese können erfindungsgemäß dazu benutzt werden, konkret für Eingaben in das auf dem PC ablaufende Anwendungsprogramm benötigte Daten (z.B. Produkt- oder Bestellnummern) auf das Tablet herunter zu laden und dort zu speichern.

Aufgrund der Anbindung des Tablets gemäß der Erfindung über die Tastaturschnittstelle besteht praktisch kein relevantes Risiko in Bezug auf die Datensicherheit. Sollte ein besonders hohes Sicherheitsniveau verlangt sein, besteht bei einer bevorzugten Ausgestaltung des erfindungsgemäßen Datenverarbeitungssystems die Möglichkeit, das Tablet so einzurichten, dass entweder die Tastaturschnittstelle oder die Netzwerkschnittstelle aktiviert wird. Dies bedeutet, mit anderen Worten, das niemals gleichzeitig die Tastaturschnittstelle und die Netzwerkschnittstelle aktiviert sein können. Eine unerwünschte direkte Verbindung des PCs über das Tablet zum Internet wird auf diese Weise sicher unterbunden.

Bei einer weiteren bevorzugten Ausgestaltung des erfindungsgemäßen Datenverarbeitungssystems ist das Tablet zur Ausführung eines Datenbankanwendungsprogramms eingerichtet. Wie oben erläutert, verlangen in Unternehmen eingesetzte Anwendungsprogramme, wie z.B. Warenwirtschaftssysteme oder Planungsprogramme (z.B. Küchenplanungs-programme) die Eingabe von Produktnummern über die Tastatur. Diese Nummern müssen herkömmlich vom Benutzer des Anwendungsprogramms entweder auswendig gelernt oder in Katalogen umständlich nachgeschlagen werden. Erfindungsgemäß kann die Datenbankanwendung dazu genutzt werden, sämtliche Produkt- oder Bestellnummern, die relevant sind, auch wenn die entsprechenden Produkte von unterschiedlichen Herstellern stammen, auf dem Tablet zu speichern und so für den Benutzer verfügbar zu machen, ohne dass sich dieser irgendwelche Nummern merken muss. Das herkömmlich erforderliche Nachschlagen in Katalogen ist nicht mehr erforderlich. Hierzu verwendet der Benutzer die auf dem Tablet installierte Datenbank, die mit geeigneten Suchfunktionen ausgestattet sein kann.

Zweckmäßig ist das Tablet eingerichtet, die in der Datenbank der auf dem Tablet ablaufenden Datenbankanwendung gespeicherten Datenobjekte auf dem integrierten Bildschirm des Tablets zu visualisieren, um die Datenobjekte für den Benutzer selektierbar zu machen. Die Datenobjekte werden beispielsweise in Form von Piktogrammen visualisiert. Die Piktogramme können schematisierte Darstellungen der Produkte sein, deren Produkt- oder Bestellnummern in das Anwendungsprogramm einzugeben sind. Ebenso können die Piktogramme schematische Darstellungen von Produkten sein, die von verschiedenen Herstellern verfügbar sind. Auf dem Tablet kann vorab angegeben werden, von welchem Hersteller das Produkt ausgewählt werden soll. Die auf dem Tablet ablaufende Datenbankanwendung ermittelt dann automatisch die hersteller-spezifische Produkt- oder Bestellnummer. Diese Ausgestaltung ist insbesondere in Kombination mit einem Küchenplanungsprogramm, das auf dem PC abläuft, sinnvoll. Der Benutzer muss auf dem Tablet nur einen bestimmten Produkttyp, z.B. ein Küchenmöbel einer bestimmten Höhe mit einer bestimmten Ausgestaltung (Regal, Schrank, Schubladenelement oder dergleichen) auswählen. Der Hersteller und gegebenenfalls auch das Material der Front wurden vorab festgelegt. Die Datenbankanwendung des Tablets setzt alle diese Festlegungen entsprechend der Selektion des Benutzers zusammen und ermittelt daraus die zugehörige Produktnummer, die über die Tastatur-schnittstelle an den PC übertragen wird. Auf dem PC muss die über die Tastaturschnittstelle erfolgte Eingabe gegebenenfalls noch (z.B. durch Betätigen der Enter-Taste am PC) bestätigt werden. Mit anderen Worten ist das Tablet des erfindungsgemäßen Datenverarbeitungssystem eingerichtet, auf eine Selektion eines Datenobjekte hin diesem Datenobjekte zugeordnete Daten (z.B. Produkt- oder Bestellnummer) über die Tastaturschnittstelle an den PC zu übertragen. Das auf dem PC ablaufende Anwendungsprogramm erhält die Daten als Tastatureingabe und akzeptiert diese.

Ausführungsbeispiele der Erfindung werden im Folgenden anhand der Zeichnungen näher erläutert. Es zeigen:
- Figur 1:: schematische Darstellung des erfindungsgemäßen Datenverarbeitungssystems;
- Figur 2:: Funktionsdiagramm des Tablets-PCs mit Datenbankanwendung.

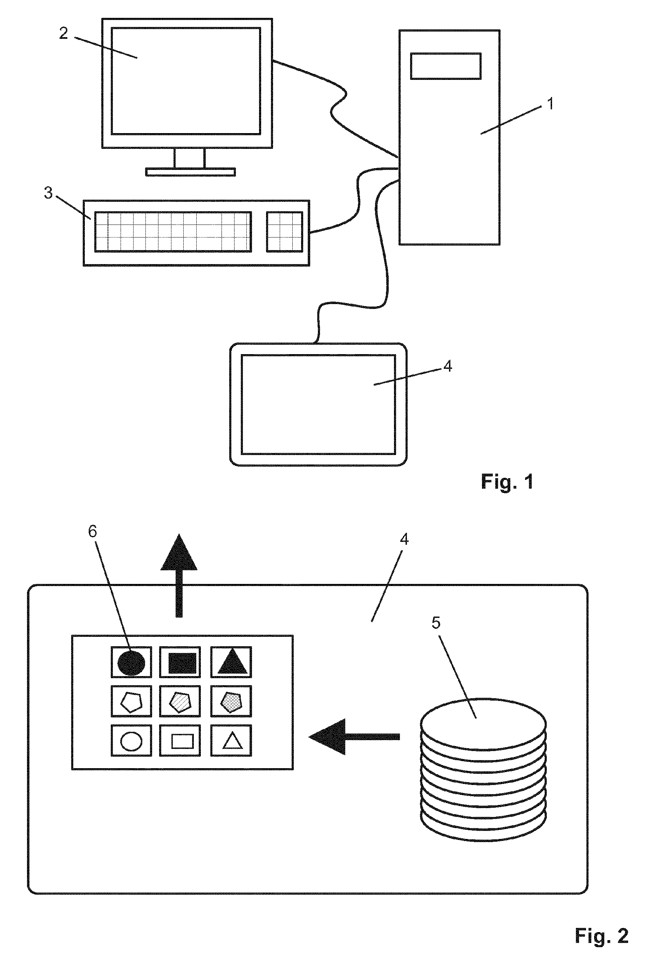

Das in der Figur 1 dargestellte Datenverarbeitungssystem umfasst einen Desktop-PC 1 in Form eines Mini-Towers. An den Desktop-PC 1 sind, wie allgemein üblich, ein Bildschirm 2 und eine Tastatur 3 angeschlossen. Zu dem dargestellten Datenverarbeitungssystem gehört des Weiteren ein Tablet-PC 4. Es handelt sich um ein übliches Tablet, wie beispielsweise ein iPad des Herstellers Apple, mit berührungsempfindlichem Bildschirm. Gemäß der Erfindung ist der Tablet-PC 4 über eine Kabelverbindung 5 an den Desktop-PC 1 angeschlossen, und zwar über eine Tastaturschnittstelle des Desktop-PCs 1. Bei der Tastaturschnittstelle handelt es sich bei dem Ausführungsbeispiele um eine USB-Schnittstelle, wobei ein (nicht dargestellter) USB-Controller des Desktop-PCs 1 den Tablet-PC 4 als Gerät der Klasse Human Interface Device behandelt. Aufgrund der Anbindung über die Tastaturschnittstelle ist der Tablet-PC, wie in der Figur 1 dargestellt, an den Desktop-PC 1 anschließbar, selbst wenn aus Gründen der Datensicherheit der Anschluss von Peripheriegeräten an den Desktop-PC durch entsprechende Konfiguration desselben unterbunden sein sollte. Auf dem Desktop-PC 1 läuft ein Tastatureingaben akzeptierendes Anwendungsprogramm ab, dass der Benutzer des dargestellten Datenverarbeitungssystems mittels des Tablet-PCs 4 bedient. Hierzu nimmt der Benutzer am Tablet-PC 4 Eingaben vor, die mittels dss Tablet-PCs 4 gegebenenfalls verarbeitet und entsprechend an den Desktop-PC 1 weiter kommuniziert werden.

Die Figur 2 zeigt schematisch den optionalen Aufbau des Tablets-PCs 4 für den erfindungsgemäßen Einsatz. Auf dem Tablet-PC 4 läuft eine Datenbankanwendung mit einer Datenbank 5 ab. Der Tablet-PC 4 ist eingerichtet, die in der Datenbank 5 gespeicherten Datenobjekte auf dem Bildschirm das Tablet-PCs 4 zu visualisieren. Dies erfolgt anhand von Piktogrammen 6, die auf dem Bildschirm des Tablets-PCs 4 dargestellt werden. Die Datenobjekte können durch Antippen der entsprechenden Piktogramme 6 auf dem berührungsempfindlichen Bildschirm des Tablet-PCs 4 selektiert werden. Die Datenbankanwendung, die auf dem Tablet-PC 4 abläuft, ermittelt auf die Selektion hin diesem Datenobjekte zugeordnete Daten (z.B. Produktnummer, Bestellnummer) und überträgt diese über die Tastaturschnittstelle an den Desktop-PC 1.

## Patentansprüche

1. Datenverarbeitungssystem mit einem Desktop- oder Laptop-PC (1) und einem Tablet-PC (4), wobei der Desktop- oder Laptop-PC (1) mit dem Tablet-PC (4) über eine Datenkommunikationsschnittstelle verbunden ist, **dadurch gekennzeichnet, dass** die Datenkommunikationsschnittstelle eine Tastaturschnittstelle ist.

2. Datenverarbeitungssystem nach Anspruch 1, **dadurch gekennzeichnet, dass** die Tastaturschnittstelle eine PS/2-Schnittstelle ist.

3. Datenverarbeitungssystem nach Anspruch 1, **dadurch gekennzeichnet, dass** die Tastaturschnittstelle eine USB-Schnittstelle ist, wobei ein USB-Controller des Desktop- oder Laptop-PCs (1) den Tablet-PC (4) als Gerät der Klasse Human Interface Device behandelt.

4. Datenverarbeitungssystem nach Anspruch 2 oder 3, **dadurch gekennzeichnet, dass** der Desktop- oder Laptop-PC (1) mit dem Tablet-PC (4) drahtlos über die Tastaturschnittstelle verbunden ist.

5. Datenverarbeitungssystem nach einem der Ansprüche 1 bis 4, **dadurch gekennzeichnet, dass** der Tablet-PC (4) eine Netzwerkschnittstelle zur Anbindung an ein lokales oder globales Netzwerk aufweist.

6. Datenverarbeitungssystem nach Anspruch 5, **dadurch gekennzeichnet, dass** der Tablet-PC (4) eingerichtet ist, entweder die Tastaturschnittstelle oder die Netzwerkschnittstelle zu aktivieren.

7. Datenverarbeitungssystem nach einem der Ansprüche 1 bis 6, **dadurch gekennzeichnet, dass** der Tablet-PC (4) zur Ausführung eines Datenbankanwendungsprogramms eingerichtet ist.

8. Datenverarbeitungssystem nach Anspruch 7, **dadurch gekennzeichnet, dass** die Datenbankanwendung eine Benutzeroberfläche aufweist, über die in einer Datenbank (5) gespeicherte Datenobjekte auf einem Bildschirm des Tablet-PCs visualisierbar und vom Benutzer selektierbar sind.

9. Datenverarbeitungssystem nach Anspruch 8, **dadurch gekennzeichnet, dass** der Tablet-PC (4) eingerichtet ist, auf eine Selektion eines Datenobjektes hin diesem Datenobjekt zugeordnete Daten über die Tastaturschnittstelle an den Desktop- oder Laptop-PC (1) zu übertragen.

10. Datenverarbeitungssystem nach einem der Ansprüche 1 bis 9, **dadurch gekennzeichnet, dass** der Desktop- oder Laptop-PC (1) zur Ausführung eines Tastatureingaben akzeptierenden Anwendungsprogramms eingerichtet ist.
